Europäisches Patentamt

European Patent Office

Office européen des brevets

(11) Publication number: **0 241 315**
A2

# (12) EUROPEAN PATENT APPLICATION

(21) Application number: 87303184.3

(22) Date of filing: 10.04.87

(51) Int. Cl.⁴: **B 63 B 35/02**
B 63 G 8/42, G 01 V 3/15

(30) Priority: 10.04.86 GB 8608743

(43) Date of publication of application:
14.10.87 Bulletin 87/42

(84) Designated Contracting States: DE FR GB NL

(71) Applicant: Seismograph Service (England) Limited
Holwood Westerham Road
Keston Kent, BR2 6HD (GB)

(72) Inventor: Lugg, Rex c/o Seismograph Serv.(England) Ltd
Holwood, Westerham Road
Keston, Kent,BR2 6HD (GB)

Breugelmans, Jacobus
Langenfeld, Hillcrest Road
Biggin Hill, Kent (GB)

(74) Representative: Lynd, Michael Arthur
MARKS & CLERK 57 Lincoln's Inn Fields
London WC2A 3LS (GB)

(54) Marine seismic survey vessel.

(57) A marine seismic survey vessel has a boom arranged to tow a plurality of towed arrays said plurality of towed arrays including at least one array of seismic sound sources and at least one array of receivers for receiving sound emitted by said seismic sound sources. Preferably the boom is attached to the vessel via a pivotal mounting. The boom may be of cantilever construction and, when not in use, may be arranged to be stored parallel to a side of the vessel. Preferably two said booms are employed, mounted respectively to port and to starboard of the vessel.

EP 0 241 315 A2

## Description

## A MARINE SEISMIC SURVEY VESSEL

This invention relates to a marine seismic survey vessel.

Marine seismic survey vessels are known and conventionally include apparatus for deploying towed arrays of sources and receivers over the stern of the vessel.

In such survey vessels, the arrays need to be spaced from one another. This spacing has conventionally been achieved by using diverters which space the arrays parallel to the direction of motion of the vessel.

Use of such diverters, however, results in reduced quality data. This is because the diverters tend to induce tow noise and turbulence thus increasing the general acoustic background noise; they also induce system drag. The diverters are also expensive and require associated landing/recovery equipment.

It is an object of the invention to provide an improved towing arrangement for towed arrays.

According to the invention there is provided a marine seismic survey vessel having a boom arranged to tow a plurality of towed arrays, said plurality of towed arrays including an array of seismic sound sources and an array of receivers for receiving sound emitted by said seismic sound sources.

It is to be understood tha a said array may be linear, i.e., the sources and/or the receivers may be in the form of a string or streamer.

It is an advantage of the invention that use of the boom obviates the need for diverters, with their associated disadvantages and also allows accurate positioning of the tow points of the arrays, resulting in increased accuracy.

An embodiment of the invention will now be described, by way of example, with reference to the accompanying drawings, in which:

Figure 1 is a side view of the stern of a marine survey vessel which includes a tow boom;

Figure 2 is a schematic plan view of the vessel shown in Figure 1, showing the boom in use.

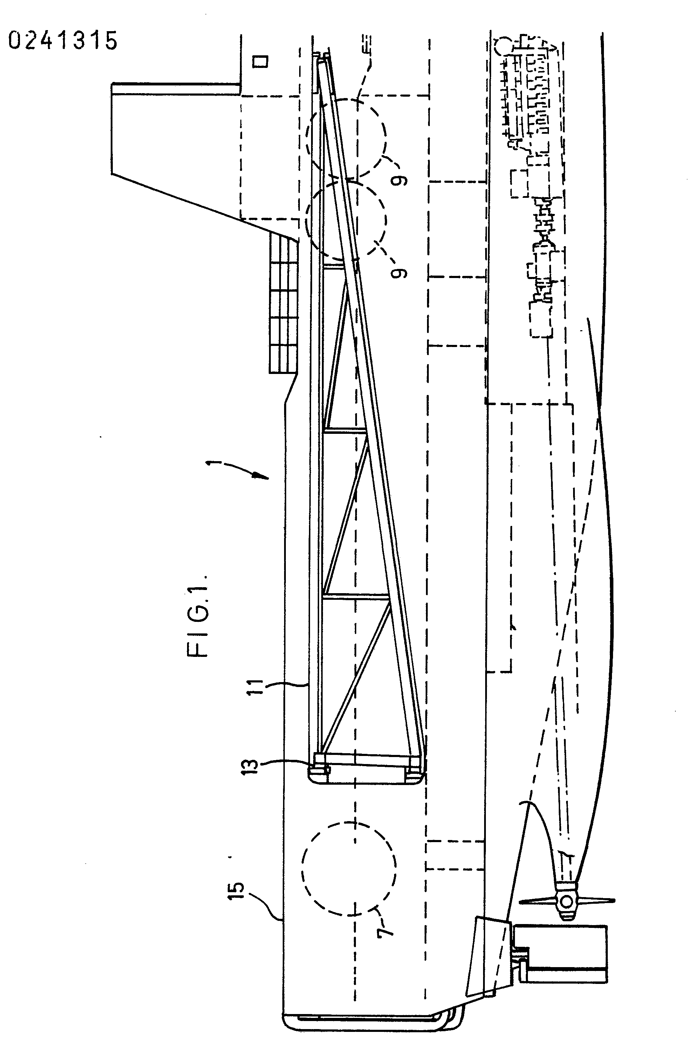

With reference to Figure 1, a marine survey vessel generally designated 1 is shown.

The marine seismic survey vessel is equipped with towed receiver and source arrays 3, 5 which are, in use, deployed astern of the vessel 1. When not in use, the receiver array is stored on drum 7, with the source arrays being stored on respective drums 9.

The vessel also includes a boom 11 attached to the vessel via a pivotal mounting 13. The boom 11 is preferably of cantilever construction and, when not in use, is stored parallel to a side 15 of the vessel 1, as shown in Figure 1. Preferably two such booms are employed mounted respectively to port and starboard of the vessel.

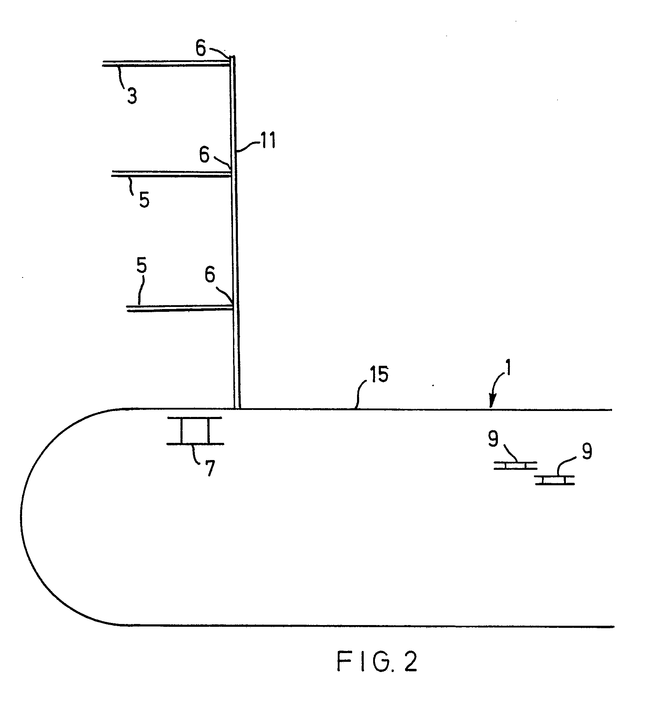

When in use, the boom is swung outwardly, so as to be disposed normal to the direction of travel of the vessel, as shown in Figure 2. The receiver and source arrays 3,5 are then paid out over the stern of the vessel 1 and are pulled over to tow points 6 on the boom 11 by means of a connecting wire. The arrays are then attached to the boom at the tow points 6 with service connections to the arrays being disposed along the boom 11.

Use of the boom 11 allows accurate positioning of tow points for both the source arrays 5 and receiver array 3, with the tow points 6 being invariant with respect to the vessel and each other. Thus, use of the boom 11 in this way removes the need to measure and/or correct continuously for the change in tow position of the arrays.

Also as the boom is attached to the vessel 1, this gives access to the actual tow points to afford adjustment and also to allow checking of the tow force and disposition of the arrays, e.g. by the use of local strain gauges.

Further advantages of the vessel of the present invention may include the following:

1). It is possible to dispense with the diverter or diverters thereby to avoid induced tow noise and turbulence, to avoid diverter system drag, and to dispense with landing/recovery equipment hitherto needed for the diverters. The result can be a simpler, cheaper and safer system.

2) The presence of long booms extending laterally on either side of the ship and to which the arrays are affixed acts to improve vessel roll stabilization and to improve depth control.

3). Manoeuvring of the vessel especially turning through 180 degrees between one survey line and a next is facilitated (particularly where 3-D surveys are conducted in the form of a plurality of closely spaced parallel lines of limited length) since there is less risk of the towed arrays becoming misplaced or tangled with each other.

## Claims

1. A marine seismic survey vessel having a boom arranged to tow a plurality of towed arrays, said plurality of towed arrays including at least one array of seismic sound sources and at least one array of receivers for receiving sound emitted by said seismic sound sources.

2. A marine seismic survey vessel according to Claim 1, wherein said boom is pivotally attached to the vessel.

3. A marine seismic survey vessel according to Claim 1, wherein the boom is adapted to be stored parallel to a side of the vessel when not in use.

4. A marine seismic survey vessel according to Claim 1, wherein the boom is of cantilever construction.

5. A marine seismic survey vessel according to Claim 1, wherein two said booms are employed, mounted respectively to port and to starboard of the vessel.

6. A marine seismic survey vessel according to Claim 1, wherein the boom is provided with fixed tow points spaced from each other, to each of which points a said array is attachable.

7. A marine seismic survey vessel according to Claim 5, which includes means for paying out said plurality of arrays over the stern of the vessel and means for subsequently attaching said arrays to the boom.

8. A marine seismic survey vessel substantially as herein before described, with reference to the accompanying drawings.

9. The features hereinbefore disclosed, or their equivalents, in any novel selection.

FIG.1.

0241315

FIG. 2